# EUROPÄISCHE PATENTSCHRIFT

(11) **EP 0 826 982 B1**
(45) Veröffentlichungstag und Bekanntmachung des Hinweises auf die Patenterteilung: **20.01.1999**
(21) Anmeldenummer: 97810523.7
(22) Anmeldetag: 23.07.1997
(51) Int. Cl.: G01S 13/88, E03D 13/00, E03C 1/05

(54) **Einrichtung zur berührungslosen Steuerung einer sanitären Armatur**
Device for contactless controlling a sanitary fitting
Dispositif pour commander sans contact une armature sanitaire

(30) Priorität: 27.08.1996 CH 2103/96
(43) Veröffentlichungstag der Anmeldung: 04.03.1998
(73) Patentinhaber: GEBERIT TECHNIK AG, 8645 Jona (CH)
(72) Erfinder: Hauser, Christoph, 8630 Rüti (CH)
(74) Vertreter: Groner, Manfred

(56) Entgegenhaltungen:
- EP-A- 0 332 045
- EP-A- 0 783 058
- DE-A- 3 210 985

## Beschreibung

Die Erfindung betrifft eine Einrichtung zur berührungslosen Steuerung einer sanitären Armatur, insbesondere eines Urinals, mit einer Detektionseinheit, die mit Radar- oder Mikrowellen arbeitet und einen Sender sowie einen Empfänger aufweist und mit einer Fernbedienungseinheit.

Eine Einrichtung zur berührungslosen Steuerung einer sanitären Armatur ist beispielsweise aus der DE-C-32 10 985 bekannt. Diese arbeitet mit Mikrowellen und wertet durch den Dopplereffekt entstehende Frequenzverschiebungen aus, derart, dass Bewegungen von Personen zur Steuerung der Armatur erfasst werden können. Ein Vorteil solcher Steuerungen besteht darin, dass diese für den Benutzer unsichtbar in einer Wandnische montiert werden kann, was einer Zerstörung oder ein Ausbau durch Vandalismus vorbeugt. Bei dieser Einrichtung besteht jedoch der Nachteil, dass ein Einstellen beispielsweise ein Ein- und Ausschalten der Armatur beispielsweise vom Reinigungspersonal dann doch wieder eine von aussen zugängliche Betätigung erfordert, welche durch Vandalismus beschädigt werden könnte.

Zur Vermeidung des genannten Nachteils ist aus der EP-B-0 332 045 eine Einrichtung zur berührungslosen Steuerung einer Sanitärarmatur bekannt, die zur Einstellung der Sanitärarmatur eine auf dem Infrarotprinzip basierende Fernbedienung aufweist. Diese Fernbedienung benötigt jedoch eine sichtbare Empfängerlinse, die beschädigt werden könnte und deshalb den leider notwendigen hohen Ansprüchen nach Vandalensicherheit doch nicht genügt. Die Empfängerlinse könnte für Servicezwecke hinter einer Abdeckplatte angeordnet werden, die dann aber für Servicearbeiten jeweils demontiert werden müsste.

Aus der JP-A-58 028 076 ist eine Fernbedienung bekannt geworden, die mit Funk arbeitet. Eine sichtbare Empfängerlinse kann hier vermieden werden. Nachteilig ist jedoch, dass bei mehreren Empfängern, wie dies beispielsweise bei Urinalanlagen häufig ist, spezielle Vorkehrungen getroffen werden müssten, wenn nur ein einzelner Empfänger angesprochen werden soll.

Der Erfindung liegt die Aufgabe zugrunde, eine Einrichtung der genannten Art zu schaffen, welche die genannten Nachteile vermeidet und die dennoch einfach bedienbar und funktionssicher ist. Die Einrichtung soll sich insbesondere auch für die Benutzung durch das Reinigungspersonal eignen.

Die Aufgabe ist bei einer gattungsgemässen Einrichtung dadurch gelöst, dass die Fernbedienungseinheit ein Organ aufweist, das Radar- oder Mikrowellen reflektiert und das bewegbar ist, derart, dass eine solche Bewegung von der Detektionseinheit aufgrund des Dopplereffektes erfassbar ist. Der Erfindung liegt die Erkenntnis zugrunde, dass eine Dopplerradar in der Lage ist, die Bewegungen eines Schallgebers zu erfassen. Bei der erfindungsgemässen Einrichtung ist eine Empfängerlinse nicht erforderlich, da der Dialog zwischen der Fernbedienungseinheit und der Detektionseinheit über Radar- oder Mikrowellen erfolgt, welche beispielsweise Keramik oder andere Baustoffe durchdringen kann. Die Detektionseinheit kann damit vollständig unsichtbar beispielsweise in einer Gebäudewand hinter einer Keramikabdeckung untergebracht werden. Wesentlich ist zudem, dass die Fernbedienungseinheit jeweils lediglich im Erfassungsbereich beispielsweise eines Urinals anspricht. Bei mehreren nebeneinander angeordneten Urinalen sind diese Erfassungsbereiche voneinander getrennt. Die Fernbedienung kann deshalb immer nur bezüglich eines Urinals ansprechen. Die erfindungsgemässe Einrichtung ist somit nicht nur sehr vandalensicher, sondern bietet bezüglich der Bedienung bei mehreren gleichzeitig vorhandenen Empfängern keine weiteren Probleme.

Die erfindungsgemässe Einrichtung kann beispielsweise zum Einund Ausschalten eines Urinals mit einem Oszillator und einem Schallgeber sehr kostengünstig realisiert werden. Der Schallgeber kann in einem wasserdichten Kunststoffgehäuse untergebracht sein, da für die Fernbedienung nicht der Schalldruck massgebend ist, sondern die Bewegung der Membran und Mikrowellen ein Kunststoffgehäuse durchdringen können.

Die Bewegung der Membran weist vorzugsweise eine Frequenz auf, die in einem Bereich liegt, der oberhalb des Frequenzbereiches liegt, wie er für die Personendetektion üblich ist. Dadurch ist eine einfache Trennung vom Benützer- und Fernbedienungssignalen möglich. Durch die Verwendung unterschiedlicher Frequenzen ist eine beliebige Codierung für die Fernbedienung möglich.

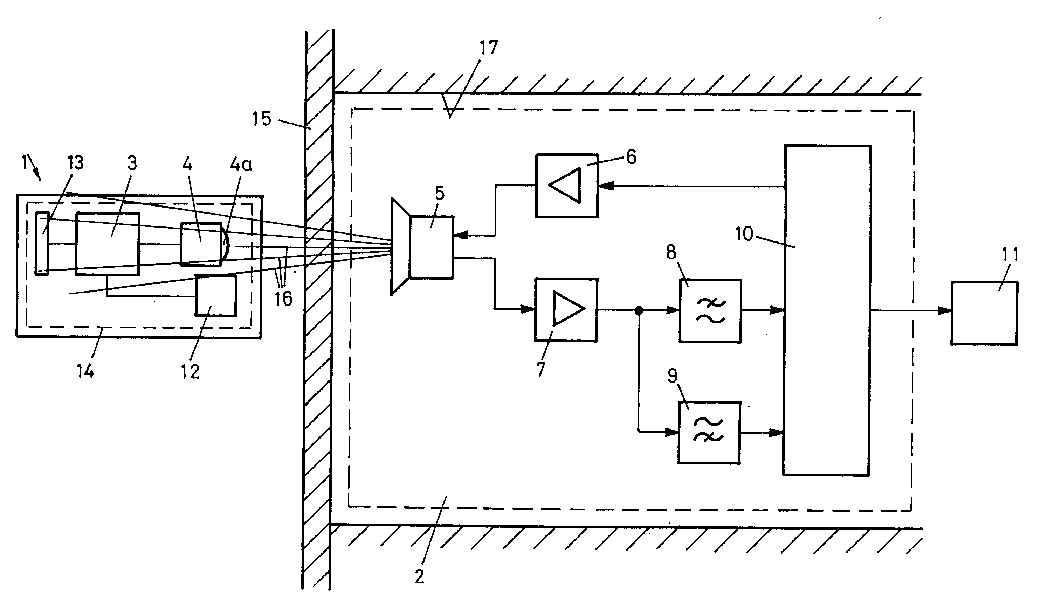

Ein Ausführungsbeispiel der Erfindung wird nachfolgend anhand einer Schaltung gemäss der einzigen Figur näher erläutert.

Die Figur zeigt eine Detektionseinheit 2, die hinter einer Wandabdeckung 15 in einer Wandnische 17 angeordnet ist und die einen Sender 6, einen Empfänger 7 und eine für die Abstrahlung und Detektion von Radar- oder Mikrowellen geeignete Antenne 5 aufweist. Die Antenne 5 ist beispielsweise ein an sich bekanntes Dopplermodul. Denkbar sind auch Ausführungen, bei denen der Sender 6 und der Empfänger 7 getrennte Antennen aufweisen.

Für die Erfassung von Personen, wie sie beispielsweise zum Spülen von Urinalen an sich bekannt ist, wird das im Empfänger 7 verstärkte Signal in einer Aufbereitungsschaltung 8, die vorzugsweise einen Tiefpassfilter aufweist, aufbereitet und einer Steuereinheit 10 zugeführt. Die Steuereinheit 10 ist zur Ansteuerung mit einer Betätigungseinrichtung 11 verbunden. Diese Betätigungseinrichtung 11 ist beispielsweise eine Spüleinrichtung eines Urinals. Die Betätigungseinrichtung kann aber auch an einer anderen Sanitärarmatur angeordnet sein. Die Ansteuerung der Betätigungseinrichtung 11 dient beispielsweise zum Ein- oder Ausschalten der Sanitärarmatur oder beispielsweise zum Einstellen einer Spüldauer.

Zur Fernbedienung der Detektionseinheit 2 ist eine Fernbedienungseinheit 1 vorgesehen, die in einem Kunststoffgehäuse 14 einen Oszillator 3, einen Schallgeber 4 mit einer Membran 4a sowie eine elektrische Energiequelle 12, beispielsweise eine Batterie sowie einen Schalter 13 aufweist. Zur Betätigung der Fernbedienung wird die Fernbedienungseinheit 1 im Abstand zur Wandabdekkung 15 so angeordnet, dass die Membran 4a etwa rechtwinklig zur Fortpflanzungsrichtung der Radar- oder Mikrowellen 16 angeordnet ist. Dieser Abstand beträgt etwa 60 bis 70 cm. Durch Betätigung des Schalters 13 wird die Membran 14a in Schwingung versetzt, beispielsweise mit einer Frequenz von 1 kHz. Diese Schwingung der Membran 4a wird aufgrund des Dopplereffektes von der Detektionseinheit 2 erfasst. Gleichzeitig erfasst die Detektionseinheit 2 weitere Signale, beispielsweise aufgrund der Bewegungen der Bedienungsperson. Aus dem empfangenen Signalgemisch wird die Information der Fernbedienungseinheit 1 in einer zweiten Aufbereitungsschaltung 9, vorzugsweise in einem Hochpassfilter, zurückgewonnen und der Steuereinheit 10 zugeführt. Die der Steuereinheit 10 zugeführte Information kann beispielsweise dazu verwendet werden, die Sanitärarmatur ein- oder auszuschalten. Durch eine Codierung verschiedener Frequenzen oder des Puls-Pause-Verhältnisses ist jedoch auch eine Einstellung von Betriebsparametern ohne weiteres möglich. Die Fernbedienungseinheit 1 kann dazu mit hier nicht gezeigten Tasten versehen sein, mit denen die unterschiedlichen Frequenzen beziehungsweise Befehle eingegeben werden können. Der Frequenzbereich für die Fernbedienung liegt vorzugsweise höher als der Frequenzbereich für die Personenerfassung. Die Trennung zwischen den Signalen, wie sie bei einer Personendetektion entstehen und den Steuersignalen der Fernbedienungseinheit 1 gestaltet sich dann besonders einfach. Eine Fernbedienung ist für Detektionseinheiten 2 mit oder ohne Richtungserkennung möglich.

Der Schwingungserzeuger 4 ist beispielsweise ein an sich bekannter Piezo-Schallgeber, der eine Membran 4a aufweist, welche Radar- oder Mikrowellen reflektiert. Da von den ausgesendeten Radar- oder Mikrowellen 16 lediglich die Bewegung der Membran 4a erfasst wird, kann der Schallgeber 4 in einem wasserdichten und geschlossenen Gehäuse 14 untergebracht werden. Das Gehäuse 14 besteht aus einem Kunststoff, der von Radar- oder Mikrowellen durchdrungen wird.

## Patentansprüche

1. Einrichtung zur berührungslosen Steuerung einer sanitären Armatur (11), insbesondere eines Urinals, mit einer Detektionseinheit (2), die mit Radar- oder Mikrowellen arbeitet und einen Sender (6) sowie einen Empfänger (7) aufweist und mit einer Fernbedienungseinheit (1), dadurch gekennzeichnet, dass die Fernbedienungseinheit (1) ein Organ (4a) aufweist, das Radar- oder Mikrowellen reflektiert und das bewegbar ist, derart, dass eine solche Bewegung von der Detektionseinheit (2) aufgrund des Dopplereffektes erfassbar ist.

2. Einrichtung nach Anspruch 1, dadurch gekennzeichnet, dass das Organ (4a) eine Membran ist.

3. Einrichtung nach Anspruch 1 oder 2, dadurch gekennzeichnet, dass das Organ (4a) an einem Schallgeber (4) angeordnet ist, mit dem am Organ(4a) mechanische Schwingungen, insbesondere Schall oder Ultraschall erzeugbar sind.

4. Einrichtung nach einem der Ansprüche 1 bis 3, dadurch gekennzeichnet, dass mit der Fernbedienungseinheit(1) Schwingungen erzeugbar sind, die sich von den Signalen bei einer Personenerfassung unterscheiden.

5. Einrichtung nach einem der Ansprüche 1 bis 4, dadurch gekennzeichnet, dass die Fernbedienungseinheit (1) in einem für Radar- und Mikrowellen durchlässigen und wasserdichten Gehäuse untergebracht ist.

6. Einrichtung nach einem der Ansprüche 1 bis 5, dadurch gekennzeichnet, dass die Fernbedienungseinheit (1) Schwingungen erzeugt, die sich von den Signalen für eine Personenerfassung unterscheiden.

7. Einrichtung nach Anspruch 6, dadurch gekennzeichnet, dass die Schwingungen des Organs (4a) im Bereich von etwa 500 bis 1200 Hz liegen und dieser Frequenzbereich höher ist als derjenige für die Personenerfassung.

8. Einrichtung nach einem der Ansprüche 1 bis 7, dadurch gekennzeichnet, dass die Detektionseinheit (2) lediglich für die Fernbedienungsfunktion Dopplersignale auswertet.

## Claims

1. Device for contactless controlling a sanitary fitting (11), particularly an urinal, with a detection unit (2) that works with radar or microwaves and disposes of a transmitter (6) and a receiver (7), and with a remote control unit (1), characterized in that the remote control unit (1) has a part (4a) reflecting the radar or microwaves and being movable in a way that due to the Doppler's principle such a move is detectable by the detection unit (2).

2. Device according to claim 1, characterized in that the part (4a) is a membrane.

3. Device according to claim 1 or 2, characterized in that the part (4a) is arranged at a transducer (4) with which mechanical oscillations, such as sound or ultrasound, can be produced at the part (4a).

4. Device according to any of claims 1 to 3, characterized in that the remote control unit (1) is able of producing oscillations that differ from the signals recognising persons.

5. Device according to claims 1 to 4, characterized in that the remote control unit (1) is arranged in a radar and microwave conducting and waterproof casing.

6. Device according to any of claims 1 to 5, characterized in that the remote control unit (1) produces oscillations that differ from signals for recognising persons.

7. Device according to claim 6, characterized in that the oscillations of the part (4a) are in the range of 500 to 1200 Hz and in that this frequency range is higher than that for recognising persons.

8. Device according to any of claims 1 to 7, characterized in that the detection unit (2) only evaluates Doppler signals for the remote control operation.

## Revendications

1. Dispositif pour commander sans contact un élément de robinetterie sanitaire (11), notamment un urinoir, comportant une unité de détection (2), qui travaille avec des ondes de radar ou des micro-ondes et possède un émetteur (6) et un récepteur (7), et une unité de télécommande (1), caractérisé en ce que l'unité de télécommande (1) comporte un organe (4a), qui réfléchit les ondes du radar ou les micro-ondes et qui est déplaçable de telle sorte qu'un tel déplacement peut être détecté par l'unité de détection (2) sur la base de l'effet Doppler.

2. Dispositif selon la revendication 1, caractérisé en ce que l'organe (4a) est une membrane.

3. Dispositif selon la revendication 1 ou 2, caractérisé en ce que l'organe (4a) est disposé sur un générateur acoustique (4), au moyen duquel des vibrations mécaniques, notamment un son ou des ultrasons, peuvent être produites au niveau de l'organe (4a).

4. Dispositif selon l'une des revendications 1 à 3, caractérisé en ce que l'unité de télécommande (1) peut produire des vibrations qui diffèrent des signaux obtenus lors de la détection d'une personne.

5. Dispositif selon l'une des revendications 1 à 4, caractérisé en ce que l'unité de télécommande (1) est logée dans un boîtier transparent pour les ondes de radar et les micro-ondes et étanche à l'eau.

6. Dispositif selon l'une des revendications 1 à 5, caractérisé en ce que l'unité de télécommande (1) produit des vibrations qui diffèrent des signaux obtenus lors de la détection d'une personne.

7. Dispositif selon la revendication 6, caractérisé en ce que les vibrations de l'organe (4a) sont situées dans la gamme d'environ 500 à 1200 Hz et que cette gamme de fréquences est supérieure à celle concernant la détection d'une personne.

8. Dispositif selon l'une des revendications 1 à 7, caractérisé en ce que l'unité de détection (2) évalue uniquement des signaux Doppler pour la fonction de télécommande.
